# EUROPEAN PATENT SPECIFICATION

(11) **EP 1 292 788 B1**
(45) Date of publication and mention of the grant of the patent: **14.09.2005**
(21) Application number: 00983586.9
(22) Date of filing: 27.12.2000
(51) Int. Cl.: F16K 35/02

(54) **A SPANNER FOR A BALL VALVE**
AKTIEVIERUNGSMECHANISMUS MIT SCHLÜSSEL FÜR KUGELVENTIL
CLE POUR ROBINET A TOURNANT SPHERIQUE

(30) Priority: 21.06.2000 PL 34097400
(43) Date of publication of application: 19.03.2003
(73) Proprietor: Zaklad Urzadzen Gazowniczych "Gazomet", 63-900 Rawicz (PL)
(72) Inventor: KAPCZYNSKI, Przemyslaw, PL-60-688 Poznan (PL); WROBLEWSKI, Marek, PL-63-900 Rawicz (PL); WLODARCZYK, Marian, PL-63-900 Rawicz (PL)
(74) Representative: Walther, Robert
(86) International application number: PCT/PL2000/000106
(87) International publication number: WO 2001/098698

(56) References cited:
- CH-A- 683 284
- DE-A- 3 142 964
- US-A- 3 148 553
- US-A- 3 648 970
- US-A- 5 183 073
- US-A- 5 647 389

## Description

This invention relates to a ball valve made of a body, of a stem and of a ball closing component, having the main hole and additional passage holes located on the opposite sides of the main hole equipped with a closing component and stem seals, having a spanner, which is integral part of the valve, made of a handle and of a root, having a base with a sediment hole in a shape corresponding to the standing outside of the body end of the stem and a latch with an elastic pressure element placed slidably in the base.

From the US 5,647,389 an indexable latching handle assembly for quarter-turn rotary valves is known, which permits the arc of operation to be oriented as necessary to avoid surrounding obstacles and enhance ease of operation, this handle assembly has a latching device capable of latching the valve in the closed position or in the open position and its readily disengaged without regard to the orientation of the handle on the valve.

A stop valve is known from CH 683 284 A5, said stop valve including a hand lever that includes two arms that are disposed at an angle to each other. The one arm thereby possesses a vertically movable pin; the hand lever cannot be moved to the one position, that is, for example from the closed position to the open position, unless the pin has been pulled upward against the force of a spring, thus releasing the respective locking position of the hand lever.

The previously mentioned ball valve is made of a body, of a ball closing component and of a valve stem and it is equipped with seal rings mounted to the stem grooves. The ball closing component has the main passage hole which enables flow of an operating medium and in addition it has passage openings located axialy opposite the main hole. There is a rotation limiter, working together with a resistance flange mounted into the body inside the limiter, located on the end of the stem, standing outside the body. There is a separate spanner, which is used for opening and closing the above mentioned valve, which ,when the valve is used, is installed on standing out end of the stem. This spanner is made of a root which has a sediment hole and a handle connected firmly to the root.

Construction of the above mentioned valve enables gradual growth of pressure in a gas piping during opening it and a slow fall of pressure while closing because additional holes used and placed in the ball closing component cause operating medium flow first through those holes and later on through the main hole of the closing component during opening of the valve. But during closing of the valve, after covering the main hole in the closing component, additional holes are opened for a certain time and later on the valve is completely closed. But the spanner used for opening and closing of the ball valve enables effective service of the valve only within the range of two extreme positions e.g. completely opened and completely closed. But it is not adapted to mating with the valve in its stage opening where phases of equalization of pressures are taken into account.

The ball valve according to invention is made of the body , the stem, and of the ball closing component having the main hole and additional passage holes opposite the main hole and it is equipped with the closing component seals and stem seals, characterized in that it has the spanner, which is an integral part of the valve.
The spanner is constructed of a handle and of a root having a base with a sediment hale in a shape corresponding to the shape of the end of the stem standing out of the body.
The base is equipped with a latch with an elastic pressure element placed slidably in the hole of the base.
There is a recess in the body, advantageusly in a shape of a bean opened at the side of the root of the spanner.
The latch end mates with the above mentioned recess.
The spanner is connected with the stem by a screw screwed into the stem axially.
In the first variety concerning the ball valve equipped with rotation limiter, the spanner is mounted with its base root on, standing outside the body, end of the stem and it adheres the rotation limiter.
In this variety, the end of the latch, at the side of the body is placed constantly in a passage hole which is situated in the rotation limiter and temporarily in the recess of the body in the range between closed and open position of the valve.
In the second variation concerning the ball valve without the rotation limiter, the spanner is mounted with the base of the root to the end of the stem standing out of the body and it adheres the surface of the body. In this case , the end of the latch, from the side of the body, is placed constantly in a recess of the body. The recess is in field between two rays placed to each other at a right angle.
The resistance ends of the recess determine position of closing and opening of the valve , moreover the recess, on the section corresponding to the range between closed and partly open position of the valve , is deeper than the rest of the recess.
The spanner for the ball valve containing the root with a sediment hole and a handle, is characterized by that it has got a latch with an elastic pressure element, which is placed slidably in the hole of the base of the root.
The latch has the form of a pin element having a sediment end on one ending and a flange placed nearby and a handle on the second ending.

The equipment of the ball valve with the spanner, being its integral part which cooperates with a closing component enables two stage valve opening e.g. the proper use of the closing component function with equalizing of pressures. Construction of the spanner guarantees reliable and simple service of the valve and what is the most important the proper position of the ball closing component, which enables preflow first with gradual coming into main flow.

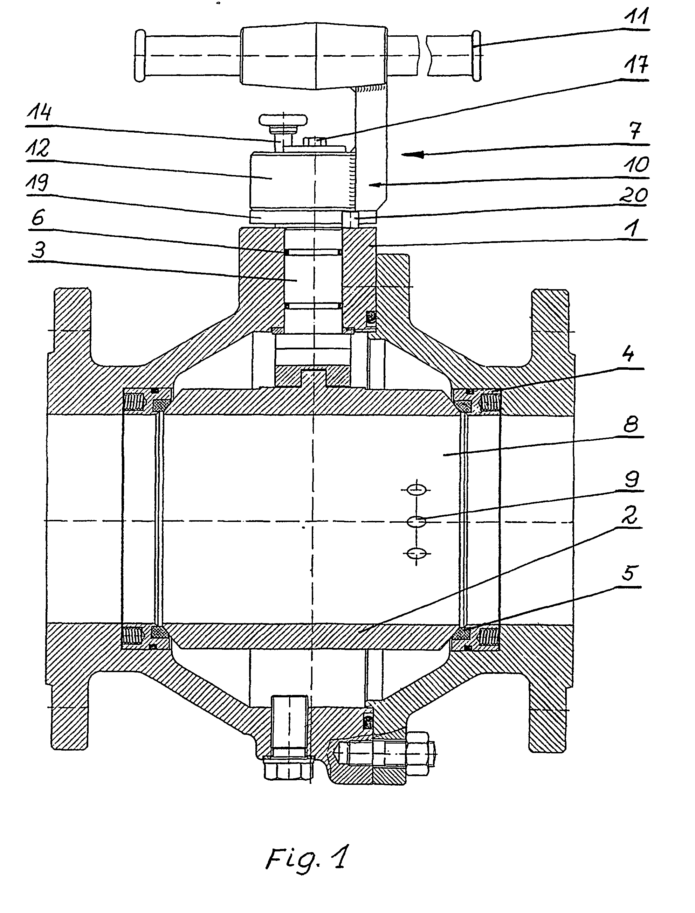

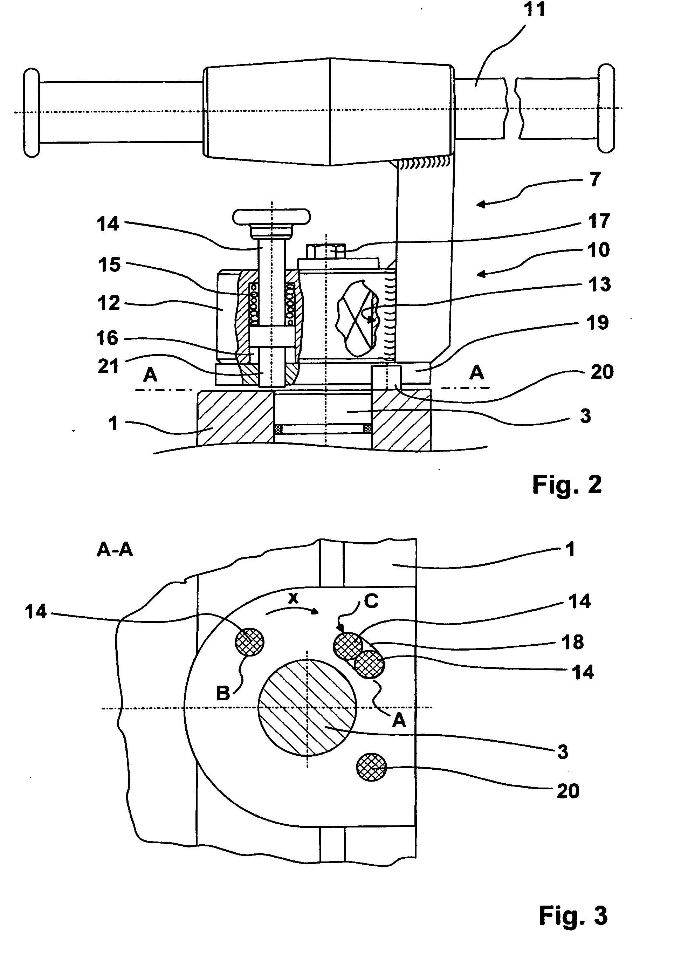

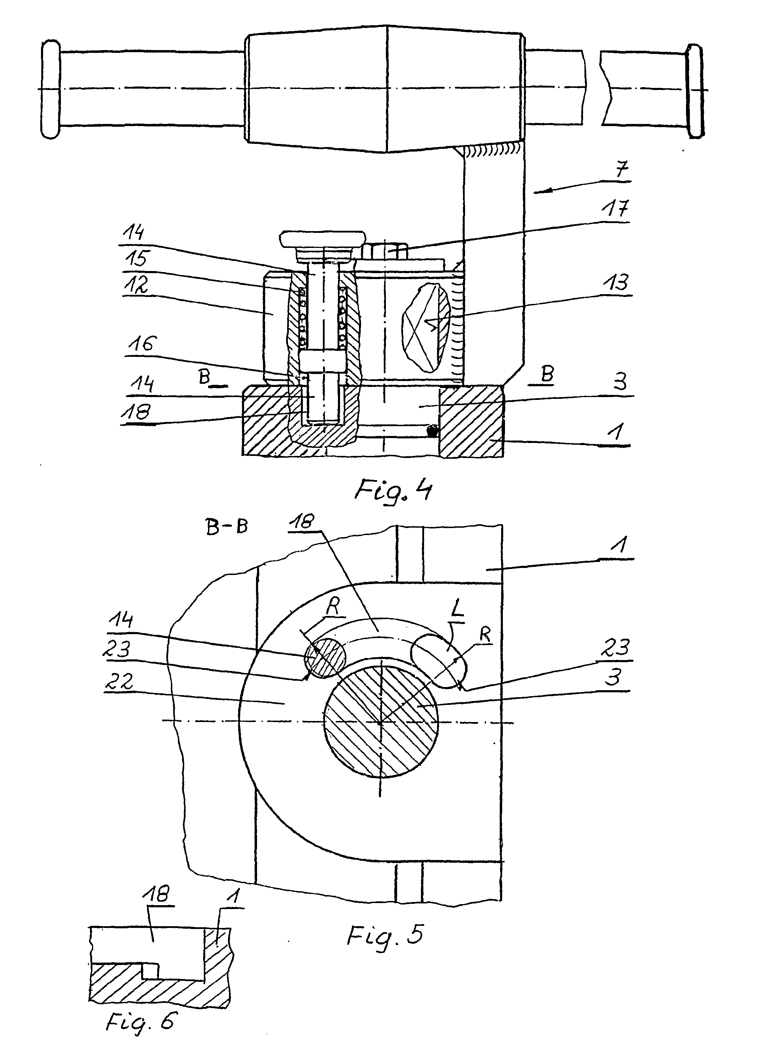

The object of the invention is represented by an example of the drawing on which FIG.1 represents the ball valve in section, FIG.2 - spanner mounting for the ball valve, in variation with the rotation limiter, FIG.3 - fragment of the valve in section A-A marked on FIG. 2 -, FIG.4 - spanner mounting for the ball valve in the variation without rotation limiter, FIG. 5 - fragment of the valve in section B-B marked on FIG.4, FIG.6 -fragment of the body having a recess as shown on FIG.5.

The ball valve, according to the invention is made of a body 1 , of a ball closing component 2 and of a stem 3 for rotation of the closing component and it is equipped with sediment rings 4 with seals 5 incorpo - rated into the body 1 inside the ball closing component 2, with seal rings 6 mounted in the grooves of the stem 3 and with a spanner 7 for opening and closing of the valve.
The ball closing component 2 has the main passage hole 8 enabling the flow of gas and it has additional passage holes 9 placed in one axis, opposite the sides of the main hole 8.

The spanner 7 , which is an integral part of the valve, is composed of a root 10 and a handle 11 . The root 10 contains a base 12 which has a sediment hole 13 in a shape complying with a shape of the ending of the stem 3 standing outside the body 1 and it is equipped with a latch 14 with an elastic pressure element 15 placed slidably in the hole 16 of the base 12 .

The spanner 7 is connected with the stem 3 by means of a screw 17 screwed axially in the stem 3 .
In the body 1 there is a recess 18 in a shape of a bean, open at the side of the root 10 of the spanner 7 .

In the first variety shown in FIG.2 in which a ball valve is equipped with rotation limiter 19 and a resistance pin 20 placed in the body 1 , the spanner 7 is mounted with its base 12 of the root 10 on the standing outside the body 1 ending of the stem 3 and it adheres rotation limiter 19. The end of the latch 14, from the side of the body is placed constantly in a passage hole 21 which is situated in rotation limiter 19 and temporarily in the recess 18 of the body 1 , in the range between closed and partly opened position of the valve. Ihe recess 18 is placed in the body 1 in such a way that it doesn't allow for openninq of the valve after achieving by ball closing component 2 the position where additional passage holes 9 are completely uncovered and the main hole 8 is still covered.
In the second variety shown in FIG.4 concerning the ball valve without rotation limiter the spanner 7 is mounted with the base 12 of the root 10 to the end of the stem 3 standing out of the body 1 and it adheres the surface 22 of the body 1 . In that variety the end of the latch 14, from the side of the body 1 , is placed constantly in a recess 18 of the body 1 .

The recess is in the range field between two rays R which are placed at a right angle to each ather. The resistance ends 23 of the recess 18 determine the extreme positions e.g. closing and opening of the valve. The recess 18 , on the segment L , corresponding to the range between closed and partly opened position of the valve, is deeper than the rest of the recess. Opening of the ball valve is in two phases - in the first one until full opening of gas flow through additional holes 9 in ball closing component 2 and after equalization of pressures being in front of and behind the valve - in the second phase, after lifting the latch 14 to full opening of main flow.
In the first variety of the valve, the latch is placed in the recess 8 of the body 1 only in the first phase and farther it relocates, along the body 1 , but in the second variety it is placed in the recess 18 for the whole time of opening and closing of the valve.

The valve is closed by continuous movement until achieving extreme position e.g. complete closing of gas flow.
The ball valve is used especially in reduction- measurement gas stations.

## Claims

1. A ball valve made of a body (1), of a stem (3) and of a ball closing component (2), having the main hole (8) and additional passage holes (9) located on the opposite sides of the main hole (8) equipped with a closing component and stem seals, having a spanner (7), which is integral part of the valve, made of a handle (11) and of a root (10), having a base (12) with a sediment hole (13) in a shape complying with a shape of the ending of the stem (3) standing outside the body (1) and a latch (14) with an elastic pressure element (15) placed slidably in the base (12) **characterized in that that** in the body (1) there is a recess (18) in a shape of a bean (see fig. 3 and 5) openend from the side of the root (10) of the spanner (7).

2. The valve, according to claim 1 **characterised in that** the spanner / 7 / is connected with the stem / 3 / through a screw / 17 / screwed into a stem / 3 / axialy .

3. The valve, according to claim 1 **characterised in that** the spanner / 7 / is mounted with its base / 12 / of the root / 10 / on the standing outside the body / 1 / end of the stem / 3 / and it adheres the rotation limiter / 19 / while the end of the latch / 14 / from the side of the body / 1 / is located constantly in a passage hole / 21 / which is in the rotation limiter / 19 / and temporarily in a recess / 18 / of a body / 1 / in the range between closed and partly opened position of the valve.

4. The valve, according to claim 1 **characterised in that** the spanner /7 / is mounted with its base / 12 / of the root / 10 / on the standing outside the body / 1 / ending of the stem / 3 / and it adheres the surface / 22 / of the body / 1 / while the end of the latch / 14 / from the side of the body / 1 / is constantly located in a recess / 18 / of the body / 1 / .

5. The valve, according to claim 4 **characterised in that** the recess / 18 / of the body / 1 / is incorporated between two rays / R / situated at a right angle to each other and resistance recess / 18 / ends / 23/ determine position of opening and closing of the valve, moreover, the recess / 18 / on the segment / L / corresponding to the range between closed and partly opened position of the valve is deeper than the rest of the recess / 18 / .

## Patentansprüche

1. Kugelventil bestehend aus einem Körper (1), einer Welle (3) und einem kugelförmigen Verschlussglied (2) mit einer Hauptöffnung (8) und zusätzlichen auf einander gegenüberliegenden Seiten der Hauptöffnung (8) eingebrachten Durchgangsöffnungen (9), ausgerüstet mit Dichtungen für das Verschlussglied und die Welle, mit einem Schließelement (7), das integraler Bestandteil des Ventils ist, bestehend aus einem Griff (11) und einem Fuß (10), mit einer Basis (12) mit einer Absetzöffnung (13), deren Form der Form des aus dem Körper (1) herausragenden Endes der Welle (3) entspricht, und mit einem Riegel (14) mit einem elastischen Druckelement (15), der verschieblich in der Basis (12) angeordnet ist,
**dadurch gekennzeichnet,**
**dass** in dem Körper (1) eine Ausnehmung (18) vorgesehen ist, die sich bohnenförmig in Richtung Fuß (10) des Schließelements (7) öffnet (siehe Figuren 3 und 5).

2. Ventil nach Anspruch 1,
**dadurch gekennzeichnet,**
**dass** das Schließelement (7) über eine axial in eine Welle (3) gedrehte Schraube (17) mit dieser Welle (3) verbunden ist.

3. Ventil nach Anspruch 1,
**dadurch gekennzeichnet,**
**dass** das Schließelement (7) mit der Basis (12) des Fußes (1) an dem aus dem Körper (1) herausragenden Ende der Welle (3) angebracht und am Rotationsbegrenzer (19) festgelegt ist, während das dem Körper (1) zugewandte Ende des Riegels (14) ständig in einer Durchgangsöffnung (21), die sich im Rotationsbegrenzer (19) befindet, und zeitweise in der im Körper (1) eingebrachten Ausnehmung (18) in dem Bereich zwischen der geschlossenen und der offenen Position des Ventils einliegt.

4. Ventil nach Anspruch 1,
**dadurch gekennzeichnet,**
**dass** das Schließelement (7) mit der Basis (12) des Fußes (1) an dem aus dem Körper (1) herausragenden Ende der Welle (3) angebracht und an der Oberfläche (22) des Körpers (1) festgelegt ist, während das dem Körper (1) zugewandte Ende des Riegels (14) ständig in einer Ausnehmung (18) des Körpers (1) einliegt.

5. Ventil nach Anspruch 4,
**dadurch gekennzeichnet,**
**dass** die Ausnehmung (18) des Körpers (1) zwischen zwei im rechten Winkel zueinander stehenden Radien (R) liegt, und die Widerstandsenden (23) der Ausnehmung (18) die Öffnungs- und Schließposition des Ventils bestimmen, und dass darüber hinaus die Ausnehmung (18) in dem Abschnitt (L), die dem Bereich zwischen der geschlossenen und der teilweise geöffneten Stellung des Ventils entspricht, tiefer ist als in dem übrigen Teil der Ausnehmung (18).

## Revendications

1. Robinet à boisseau sphérique formé par un corps (1), une tige (3) et un obturateur sphérique (2), avec un trou principal (8) et des trous traversants supplémentaires (9) situés de part et d'autre du trou principal (8), équipé de joints d'étanchéité pour l'obturateur et la tige, avec une clé (7) faisant partie intégrante du robinet et constituée par une poignée (11) et un pied (10), avec une base (12) avec un trou de sédimentation (13) dont la forme correspond à la forme de l'extrémité de la tige (3) faisant saillie hors du corps (1) et avec un verrou (14) avec un élément de compression élastique (15) disposé à coulissement dans la base (12),
**caractérisé en ce**
**que** dans le corps (1) est prévu un évidement (18) ayant la forme d'un haricot (cf. figures 3 et 5) ouvert du côté du pied (10) de la clé (7).

2. Robinet selon la revendication 1,
**caractérisé en ce**
**que** la clé (7) est reliée à la tige (3) par une vis (17) vissée axialement dans une tige (3).

3. Robinet selon la revendication 1,
**caractérisé en ce**
**que** la clé (7) est montée par la base (12) de son pied (10) à l'extrémité de la tige (3) faisant saillie hors du corps (1) et adhère au limiteur de rotation (19) tandis que l'extrémité du verrou (14) tournée du côté du corps (1) se trouve en permanence dans un trou traversant (21) ménagé dans le limiteur de rotation (19) et temporairement dans un évidement (18) du corps (1) dans la zone comprise entre la position fermée et ouverte du robinet.

4. Robinet selon la revendication 1,
**caractérisé en ce**
**que** la clé (7) est montée par la base (12) de son pied (10) à l'extrémité de la tige (3) faisant saillie hors du corps (1) et adhère à la surface (22) du corps (1) tandis que l'extrémité du verrou (14) tournée vers le corps (1) se trouve en permanence dans un évidement (18) du corps (1).

5. Robinet selon la revendication 4,
**caractérisé en ce**
**que** l'évidement (18) du corps (1) est incorporé entre deux rayons (R) formant un angle droit entre eux, et les extrémités de résistance (23) de l'évidement (18) déterminent la position d'ouverture et de fermeture du robinet, de plus, l'évidement (18) est plus profond dans le segment (L) qui correspond à la zone comprise entre la position fermée et la position partiellement ouverte du robinet que dans le reste de l'évidement (18).
